# EUROPEAN PATENT SPECIFICATION

(11) **EP 4 050 231 B1**
(45) Date of publication and mention of the grant of the patent: **16.08.2023**
(21) Application number: 21167598.8
(22) Date of filing: 09.04.2021
(51) Int. Cl.: F16D 9/04, B64C 27/00, B64C 27/12

(54) **AN OVERLOAD COUPLING FOR ROTATING DRIVE SYSTEMS**
ÜBERLASTKOPPLUNG FÜR ROTIERENDE ANTRIEBSSYSTEME
COUPLAGE DE SURCHARGE POUR SYSTÈMES D'ENTRAÎNEMENT ROTATIFS

(30) Priority: 25.02.2021 EP 21400004
(43) Date of publication of application: 31.08.2022
(73) Proprietor: Airbus Urban Mobility GmbH, 80333 Munich (DE)
(72) Inventor: BLACHA, Dr Martin, 86609 DONAUWÖRTH (DE); REICHENSPERGER, Christian, 86698 OBERNDORF AM LECH (DE)
(74) Representative: GPI Brevets

(56) References cited:
- EP-A2- 1 279 849
- WO-A1-2008/149732
- JP-A- 2003 254 402

## Description

This application claims priority to European Patent Application No 21400004.4, filed on February 25, 2021.

The present invention relates to an overload coupling, and, more particularly, to an overload coupling for coupling a driving device to a driven device. The present embodiments also relate to a rotating drive system with such an overload coupling, to a rotor system with such a rotating drive system, and to a rotary-wing aircraft with such a rotor system.

Rotating drive systems usually require connecting parts that are able to reliably transfer high torques, moments, and/or rotational speeds in the nominal driving direction. Moreover, the entire rotating drive system generally needs to exhibit a high rigidity in order to avoid vibrations or oscillations. Furthermore, the rotating drive system is usually required to transfer a certain decelerating moment in the direction that is opposite the nominal driving direction.

However, due to the high inertia of the rotating parts, very high forces and/or moments may be generated in case of a failure. As an example, a failure may involve the blocking of an engine or a bearing. Sometimes, such a failure may involve a sudden stoppage of at least a portion of the rotating drive system. Such a sudden stoppage may cause serious damage not only to the rotating drive system itself, but also to the parts that are connected to the rotating drive system and sometimes even to people in the vicinity of such rotating drive systems.

For example, a sudden stoppage of a helicopter engine may cause a complete rupture of the drive train between the helicopter engine and the rotor blades.

Overload couplings may prevent such catastrophic failures of rotating drive systems. However, conventionally, such overload couplings are complex, heavy, and fatigue sensitive, which is an issue especially in aircraft applications.

Document WO 2008/149732 A1 describes a power transmission device having a coupling portion of a driven body and a drive body constituted by combining a positive torque transmission member for transmitting torque in forward rotational direction but interrupting transmission of torque from the drive body by breaking itself when the drive load of the driven body exceeds a predetermined level, with a separate negative torque transmission member for transmitting torque in reverse rotational direction is further provided with a means for generating pretension in the positive torque transmission member in the pulling direction and simultaneously generating a pretension in the negative torque transmission member in the compressing direction after both torque transmission members are combined. A highly reliable power transmission device which can impart a desired pretension precisely and conveniently, and can interrupt torque properly by suppressing fatigue of material at the coupling portion can be provided.

Document EP 2 060 814 A1 describes a power transmission device in which a driven body and a driving body for driving the driven body are rotated in the same direction and are connected to each other by a connection section to transmit torque of the driving body to the driven body and in which the transmission of the torque from the driving body is interrupted when a drive load on the driven body exceeds a predetermined level. The connection section is constructed by combining separate elements that are a positive torque transmission member, and a negative torque transmission mechanism or a negative torque transmission member. The positive torque transmission member transmits torque in the normal rotational direction and interrupts transmission of torque from the driving body by breaking itself when a drive load on the driven body exceeds the predetermined level. The negative torque transmission mechanism or the negative torque transmission member can transmit torque in the reverse rotational direction. In the power transmission device, fatigue of materials of the connection section is suppressed and torque is accurately interrupted at a target interruption torque value.

These prior art solutions both require complex assemblies with multiple different parts in the load path. However, an increase in the number of parts is usually more cost intensive in the production, in the quality management, and in the part inventory management.

Document EP 3 730 920 A1 describes an automotive air-conditioning damper-limiter pulley testing machine. The testing machine is for testing of the pulley endurance, in particular the damper and the limiter without connection to an air-conditioning system. The limiter is a mainly shear/bending driven design of a shear plate with arms. The individual arms are curved and intended to break in case of reverse overload.

Document WO 2013/168889 A1 describes a compressor pulley assembly in which a pulley forming the pulley assembly is formed of a magnesium alloy and which prevents damage that can occur during processing and is suitable for high-temperature environments, and to a method for manufacturing same. The compressor pulley assembly according to the present invention is configured to include: a pulley having a hollow cylindrical shape and formed of a magnesium alloy; a cylindrical inner ring that is integrated in the pulley by insert injection molding, is fixed to an inner circumferential surface of the pulley, and is formed of a material that is different from the material of the pulley; and a bearing that is press-fitted and fixed to an inner circumferential surface of the inner ring.

However, the latter two solutions are based on curved arms that are neither fail-safe nor damage tolerant. The fatigue sensitivity is high, and the arrangement requires additional items or parts respectively.

Document EP 1 279 849 A2 describes a torque limiter which operatively couples a rotor of an engine to a driving shaft of a compressor. The torque limiter is configured so as to be able to cut off transmission of an excessive torque from the engine to the compressor. More specifically, the torque limiter is formed by a main body and a cylindrical portion. The main body is constituted by an outer peripheral portion, an inner peripheral portion disposed at the inside of the outer peripheral portion, and coupling portions coupling the outer peripheral portion and the inner peripheral portion so as to bridge them. The cylindrical portion is protrusively provided at the center position of the inner peripheral portion. The torque limiter is made of sintered metal such as JIS (Japanese Industrial Standard), 12EPC etc. and configured by integrally forming the outer peripheral portion, the inner peripheral portion, the coupling portions and the cylindrical portion. Three coupling portions are provided with the same interval around the axial line of the driving shaft. Each of the coupling portions is slanted on the clockwise side toward the outer peripheral portion from the inner peripheral portion. Thus, at the time of power transmission, tensile stress acts on the coupling portions between the outer peripheral portion and the inner peripheral portion by the torque limiter rotating clockwise. Each of the coupling portions is configured to be thinner in its width gradually toward the inner peripheral portion from the outer peripheral portion. A broken portion is provided around a boundary between the inner peripheral portion and each of the coupling portions.

Based on the limitations and drawbacks of the prior art, an objective is to provide an overload coupling that overcomes the above described limitations and drawbacks of prior art solutions. Furthermore, the overload coupling should be lightweight, simple, robust, fail-safe, fatigue-insensitive, sturdy in the nominal rotation direction and reliably protect the rotating drive system from overloading in the reverse rotation direction. This objective is solved by an overload coupling comprising the features of claim 1.

More specifically, an overload coupling for coupling a driving device to a driven device comprises an inner connecting element and an outer connecting element that are concentrically arranged and rotate in normal operation around a common rotation axis in a section of rotation, wherein the inner connecting element is coupled to the driving device and the outer connecting element is coupled to the driven device. The overload coupling further comprises at least a first and a second arm that connect the inner connecting element with the outer connecting element, wherein the first arm is attached to the inner connecting element at a first attachment point and to the outer connecting element at a second attachment point, wherein the second attachment point is angularly displaced relative to the first attachment point by a first angle such that the first attachment point is ahead of the second attachment point in the first direction of rotation, wherein the second arm is attached to the inner connecting element at a third attachment point and to the outer connecting element at a fourth attachment point, wherein the fourth attachment point is angularly displaced by a second angle relative to the third attachment point such that the third attachment point is ahead of the fourth attachment point in the first direction of rotation, wherein the first and second angles have first and second initial values, respectively, when no force is acting on the first and second arms, wherein the first and second initial values are smaller than 175 degrees, and wherein each one of the at least first and second arms comprises an arrangement of at least one plate, wherein the at least one plate is loaded in tension when a first torque acts on the inner connecting element in the first direction of rotation or on the outer connecting element in a second direction of rotation that is opposite the first direction of rotation, and wherein the at least one plate is loaded with a compression force when a second torque acts on the inner connecting element in the second direction of rotation or on the outer connecting element in the first direction of rotation, wherein the first and second arms are formed with predefined geometries to enable buckling of the first and second arms when the second torque exceeds a predetermined threshold, and wherein the second torque causes the first and second angles to decrease below the respective first and second initial values. The arrangement of the at least one plate comprises a staggered arrangement of at least two separate plates.

It should be noted that above the inner connecting element is coupled to the driving device and the outer connecting element is coupled to the driven device. However, if desired, the inner connecting element may be coupled to the driven device and the outer connecting element may be coupled to the driving device. In this case, an overload coupling for coupling a driving device to a driven device comprises an inner connecting element and an outer connecting element that are concentrically arranged and rotate in normal operation around a common rotation axis in a section of rotation, wherein the outer connecting element is coupled to the driving device and the inner connecting element is coupled to the driven device. The overload coupling further comprises at least a first and a second arm that connect the inner connecting element with the outer connecting element, wherein the first arm is attached to the inner connecting element at a first attachment point and to the outer connecting element at a second attachment point, wherein the second attachment point is angularly displaced relative to the first attachment point by a first angle such that the first attachment point is ahead of the second attachment point in the first direction of rotation, wherein the second arm is attached to the inner connecting element at a third attachment point and to the outer connecting element at a fourth attachment point, wherein the fourth attachment point is angularly displaced by a second angle relative to the third attachment point such that the third attachment point is ahead of the fourth attachment point in the first direction of rotation, wherein the first and second angles have first and second initial values, respectively, when no force is acting on the first and second arms, wherein the first and second initial values are smaller than 175 degrees , and wherein each one of the at least first and second arms comprises an arrangement of at least one plate, wherein the at least one plate is loaded in tension when a first torque acts on the inner connecting element in the first direction of rotation or on the outer connecting element in a second direction of rotation that is opposite the first direction of rotation, and wherein the at least one plate is loaded with a compression force when a second torque acts on the inner connecting element in the second direction of rotation or on the outer connecting element in the first direction of rotation, wherein the first and second arms are formed with predefined geometries to enable buckling of the first and second arm when the second torque exceeds a predetermined threshold, and wherein the second torque causes the first and second angles to decrease below the respective first and second initial values. The arrangement of the at least one plate comprises a staggered arrangement of at least two separate plates.

Each plate may have an individual thickness, material, adapted shape, etc.

If desired, the at least first and second arms may have an out-of-plane curvature or other features that would facilitate the decrease of first and second angles below the respective first and second initial values when the second torque is applied.

Preferably, the overload coupling comprises a staggered arrangement of several plates. Illustratively, the inner connecting element may be an inner ring and the outer connecting element a concentric outer ring. The inner and outer ring may be connected by at least two arms. If desired, the inner and outer ring may be connected by more than two arms.

Illustratively, the arms should be almost tangential to the inner ring's outer diameter. If desired, the arms may be tilted relative to a purely tangential orientation in case this is beneficial for the individual application. The tangential or almost tangential orientation of the arms leads to a direction-dependent stiffness and failure behavior.

The inner ring may be connected to a driving device such as an engine or a drive shaft. Illustratively, the outer ring may be connected to a driven device such as a rotor, a rotor shaft, a wheel, or any other driven device.

The behavior under load is dependent on the sense of rotation of the overload coupling. In other words, the overload coupling exhibits a separation between the two opposing torque directions. A torque that is transferred during a normal operation of the driving device is sometimes also referred to as a positive torque. A torque in a direction that is in an opposite direction to the positive torque is sometimes also referred to as negative torque.

Positive torque loads the individual arms in tension. The coupling between the inner and outer rings is extremely stiff under positive torque. The coupling, and in particular the individual arms, may only fail when the ultimate strength of the material is exceeded.

Negative torque loads the individual arms with compression. At comparatively small negative torque, the individual arms are still able to transfer the load with high stiffness. However, when the negative torque exceeds a first predefined threshold, the individual arms start to buckle. A further increase of negative torque may lead to a stepwise collapse of the coupling. It should be noted that the first predefined threshold and any other threshold at which the coupling collapses may be realized by selecting the number of arms, the geometries of the individual arms, and/or the geometries and number of separate plates, accordingly.

This first predefined threshold is also known as Euler's critical load and the corresponding buckling as Euler's buckling, Euler buckling, or Eulerian buckling. As Euler's buckling occurs on all individual arms, the transferrable moment decreases suddenly, and the rotational stiffness of the overload coupling is extremely low.

Between the first predefined threshold and a second predefined threshold, an almost free relative movement of the inner and outer rings is possible. When the negative torque reaches the second predefined threshold, the arms may be ripped off the inner or outer ring. This characteristic is beneficial in a highly dynamic environment as the forces for ripping off the arms is comparatively low and don't lead to an overload in any other region of the rotating parts.

After ripping off the arms, a free rotation of the outer ring is possible, and a blocking of the driven device is avoided. Thus, in a failure case, a smooth overload behavior is generated without sudden or arbitrary load peaks.

The abovementioned overload coupling offers several advantages compared to conventional overload couplings. For example, when positive torque is applied (i.e., in the main driving direction), the overload coupling is extremely rigid and stiff, has an excellent dynamic behavior, and big radial forces may be transferred.

However, when negative torque is applied, the characteristics of the overload coupling may be tuned to almost any desired static and dynamic characteristic (e.g., by selecting the number of arms, the geometries of the individual arms, and/or the geometries and number of separate plates). These characteristics may include the determination of thresholds at which the arms start to buckle and rip off. Furthermore, a free rotation can take place after the arms have been ripped off. The free rotation avoids high accelerations and thus stress peaks in the parts to be protected. Moreover, in case the arms are made of a material with a certain yielding behavior, debris can be avoided as the arms stay connected to at least one end.

Furthermore, the abovementioned overload coupling is simple to manufacture as it requires merely a sheet or a few identical sheets in case of a staggered arrangement of plates, is cheap as it may be made of sheet parts and standard parts only, has a high robustness as even some of the individual arms can fail without a notable detrimental impact on the load transfer, can be adapted in diameter and size to any environment, can consist of any material (e.g., metal, fiber reinforced materials, plastics, etc.), and requires no other parts (e.g., screws, connectors, etc.).

The above mentioned overload coupling may be joined easily with adjacent structures such as driving device and driven device. For example, the overload coupling may be joined with the driving device and/or the driven device through moulding, welding, riveting, simple form fit, etc, or any combination thereof. It may be simple to install and to replace. If desired, the overload coupling may be combined in any arbitrary way with bearings and other functional items.

Moreover, a fail-safe and damage tolerant design may be achieved with several staggered sheets and multiple arms in the load path. The design may further be non-sensitive to fatigue due to smooth transitions without notches between the inner ring, the arms, and the outer ring. The design may also be in-sensitive to centrifugal forces and can be used for extremely fast rotating applications such as drive shafts for turbines.

Additionally, Euler's buckling is very predictive. Thus, it is easy to predict the point of failure in a very reliable manner and precisely. The buckling is barely dependent on fatigue and environmental conditions such as temperature or moisture. For example, the buckling may dependent on the number of sheets and the dimensions.

According to one aspect, at least two of the at least two separate plates are separated by a gap.

According to one aspect, at least two of the at least two separate plates have a different thickness.

According to one aspect, at least two of the at least two separate plates are made of different materials.

According to one aspect, the second attachment point comprises a plurality of attachments, each attachment of the plurality of attachments being located at a different location on the outer connecting element, wherein at least two adjacent plates of the at least two separate plates connect the first attachment point with different attachments of the plurality of attachments, and wherein the at least two adjacent plates are located immediately next to each other in the staggered arrangement.

According to one aspect, the at least two adjacent plates overlap each other partially at the second attachment point.

According to one aspect, the at least two adjacent plates overlap each other at the second attachment point with an increasing overlap in the second direction of rotation.

According to one aspect, the at least two adjacent plates connect the first attachment point with two attachments of the plurality of attachments that are separated by at least one other attachment of the plurality of attachments.

According to one aspect, the inner connecting element is ring-shaped and has an outer diameter.

According to one aspect, the at least first and second arms are arranged tangential to the outer diameter of the inner connecting element.

According to one aspect, the outer connecting element is ring-shaped.

According to one aspect, the overload coupling further comprises fasteners that fasten the at least first and second arms to at least one of the inner connecting element or the outer connecting element.

According to one aspect, the at least first and second arms are integrally formed with at least one of the inner connecting element or the outer connecting element.

According to one aspect, the at least first and second arms comprise at least one of a fillet or a recess at the transition with the at least one of the inner connecting element or the outer connecting element.

According to one aspect, the at least first and second arms further comprise at least one of an out-of-plane pre-deformation or a narrowing section.

According to one aspect, the first and third attachment points are equally spaced around the common rotation axis.

Moreover, a rotating drive system may include a driving device, a driven device, and the overload coupling as described above.

Furthermore, a rotor system for a rotary-wing aircraft may include the abovementioned rotating drive system, wherein the driving device comprises at least an engine, and wherein the driven device comprises at least a plurality of rotor blades.

Moreover, a rotary-wing aircraft may include the rotor system as described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotary-wing aircraft with an illustrative rotor system having an illustrative rotating drive system with an illustrative overload coupling in accordance with some embodiments,
- Figure 2A is a diagram of an illustrative rotating drive system 270 with an overload coupling between a driving device and a driven device that have a same rotation axis in accordance with some embodiments,
- Figure 2B is a diagram of an illustrative rotating drive system 270 with an overload coupling between a driving device and a driven device that have different rotation axes in accordance with some embodiments,
- Figure 3 is an isometric view of an illustrative overload coupling with a staggered arrangement of separate plates in accordance with some embodiments,
- Figure 4 is a diagram of an illustrative overload coupling with an inner and outer ring and three arms in accordance with some embodiments,
- Figure 5 is a diagram of several illustrative overload couplings having differing numbers of arms that connect an inner and an outer connecting element and that are arranged tangential to the outer diameter of the inner ring in accordance with some embodiments,
- Figure 6A is a diagram of an illustrative overload coupling with four arms between an inner and outer ring in accordance with some embodiments,
- Figure 6B is a diagram of a partial view of the illustrative overload coupling of Figure 6A showing an arm that deviates by a predetermined angle from a tangential arrangement to the outer diameter of the inner ring in accordance with some embodiments,
- Figure 6C is a diagram of a partial view of the illustrative overload coupling of Figure 6A showing an arm with a narrowing section between the inner and outer rings in accordance with some embodiments,
- Figure 6D is a diagram of a partial view of the illustrative overload coupling of Figure 6A showing an arm that is fastened to the outer ring with a fastener in accordance with some embodiments,
- Figure 6E is a diagram of a partial view of the illustrative overload coupling of Figure 6A showing an arm that is fastened to the inner ring with a fastener in accordance with some embodiments,
- Figure 6F is a diagram of a partial view of the illustrative overload coupling of Figure 6A showing an arm that includes a fillet at the transition with the inner ring in accordance with some embodiments,
- Figure 6G is diagram of a partial view of the illustrative overload coupling of Figure 6A showing an arm that includes a recess at the transition with the inner ring in accordance with some embodiments,
- Figure 7A is a diagram of an illustrative overload coupling with a staggered arrangement of plates and integrally formed inner ring, arms, and outer ring in accordance with some embodiments,
- Figure 7B is a diagram of an illustrative cross-section of an arm with a staggered arrangement of plates that all have the same thickness in accordance with some embodiments,
- Figure 7C is a diagram of an illustrative cross-section of an arm with a staggered arrangement of plates that have at least two plates with a different thickness in accordance with some embodiments,
- Figure 7D is a diagram of an illustrative cross-section of an arm with a staggered arrangement of plates that have at least two plates that are separated by a gap in accordance with some embodiments,
- Figure 7E is a diagram of an illustrative cross-section of an arm with a staggered arrangement of plates and a narrowing section in accordance with some embodiments,
- Figure 8A is a diagram of an illustrative overload coupling with a staggered arrangement of plates, integrally formed inner ring, arms, and outer ring, and a plurality of attachments for each arm at the outer ring in accordance with some embodiments,
- Figure 8B is a diagram of an illustrative cross-section of an arm with a staggered arrangement of plates with partially overlapping adjacent plates at the attachment point with the outer ring in accordance with some embodiments,
- Figure 8C is a diagram of an illustrative cross-section of an arm with a staggered arrangement of plates with overlapping adjacent plates at the attachment point with the outer ring and an increasing overlap in one direction of rotation in accordance with some embodiments,
- Figure 9A is a diagram of an illustrative overload coupling with arms made of a staggered arrangement of plates that connect an attachment point on the inner ring with different attachments on the outer ring in accordance with some embodiments,
- Figure 9B is a diagram of an illustrative cross-section of an arm with a staggered arrangement of plates and adjacent plates that have non-adjacent attachments on the outer ring in accordance with some embodiments,
- Figure 9C is a diagram of an illustrative cross-section of an arm with a staggered arrangement of plates and adjacent plates that have adjacent, non-overlapping attachments on the outer ring in accordance with some embodiments,
- Figure 10 is a diagram of an illustrative functional behavior of an overload coupling showing a possible relationship between the torque that is applied to inner and outer connecting elements and the rotational deformation angle between inner and outer connecting elements in accordance with some embodiments,
- Figure 11 is a diagram of an illustrative overload coupling with inner ring and arms that extend tangentially from the outer diameter of the inner ring in accordance with some embodiments,
- Figure 12A is a diagram of the illustrative overload coupling of Figure 11 at a first negative rotational deformation angle at which the arms are subject to an elastic deformation in accordance with some embodiments,
- Figure 12B is a diagram of the illustrative overload coupling of Figure 11 at a second negative rotational deformation angle at which the arms start to buckle in accordance with some embodiments,
- Figure 12C is a diagram of the illustrative overload coupling of Figure 11 at a third negative rotational deformation angle at which the arms further buckle in accordance with some embodiments,
- Figure 12D is a diagram of the illustrative overload coupling of Figure 11 at a fourth negative rotational deformation angle at which the arms are twisted in accordance with some embodiments,
- Figure 12E is a diagram of the illustrative overload coupling of Figure 11 at a fifth negative rotational deformation angle at which the arms are about to be ripped off from the inner ring in accordance with some embodiments, and
- Figure 12F is a diagram of the illustrative overload coupling of Figure 11 at a sixth negative rotational deformation angle at which the arms have been ripped off the inner ring in accordance with some embodiments.

Exemplary embodiments may be used with any devices or vehicles with a rotating drive system that includes a driving device and a driven device that are connected by a rotating drive shaft with an overload coupling in which the drive shaft rotates around an associated rotation axis and transmits thereby mechanical torque from the driving device to the driven device. Examples for such devices may include wind turbines, transmission of forces from an engine, transmissions of forces from/to rotors, dynamometers, etc. Examples for vehicles may include aircraft such as airplanes, quadcopters, helicopters, and drones, landbased vehicles including cars, buses, trucks, and motorcycles, or vessels such as ships and boats, etc.

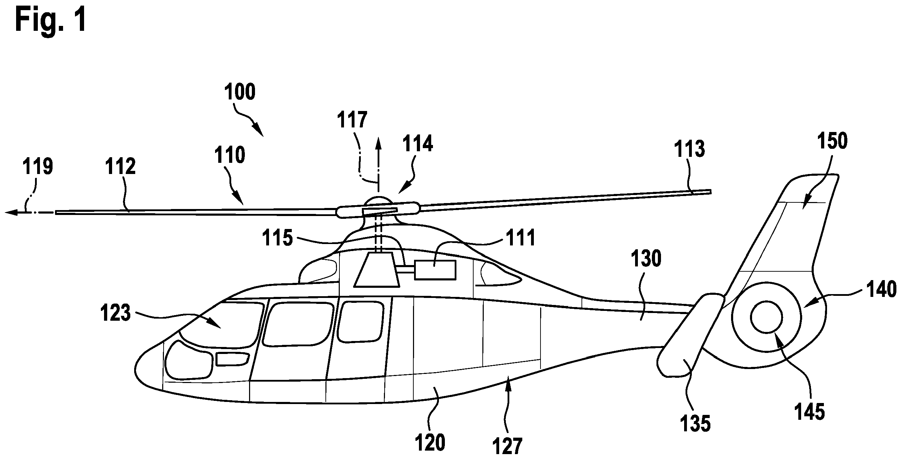

Figure 1 is a diagram of an illustrative aircraft that is embodied as a rotary-wing aircraft 100 having at least one rotor system 110 with a rotor shaft 115. As shown in Figure 1, the rotary-wing aircraft 100, which is sometimes also referred to as rotorcraft 100, is exemplarily illustrated as a helicopter. Thus, for purposes of simplicity and clarity, the rotorcraft 100 is hereinafter referred to as the "helicopter" 100.

Illustratively, helicopter 100 may have a fuselage 120 that forms an airframe of the helicopter 100. The fuselage 120 is connected to a suitable landing gear and exemplarily forms a cabin 123 and a rear fuselage 127. The rear fuselage 127 is connected to a tail boom 130.

By way of example, helicopter 100 may include at least one counter-torque device 140 configured to provide counter-torque during operation, i.e. to counter the torque created by rotation of the at least one rotor system 110 for purposes of balancing the helicopter 100 in terms of yaw. If desired, counter-torque device 140 may be shrouded.

The at least one counter-torque device 140 is illustratively provided at an aft section of the tail boom 130 and may have a tail rotor 145. The aft section of the tail boom 130 may include a fin 150. Illustratively, the tail boom 130 may be provided with a suitable horizontal stabilizer 135.

Illustratively, helicopter 100 may have at least one rotor system 110, which is illustratively provided as a multi-blade rotor system 110, for providing lift and forward or backward thrust during operation. The at least one rotor system 110 comprises an engine 111 coupled to a plurality of rotor blades 112, 113. By way of example, the plurality of rotor blades 112, 113 may be mounted at an associated rotor head 114 to a rotor shaft 115, which rotates in operation of the helicopter 100 around an associated rotation axis 117 in a rotor plane 119.

The rotor shaft 115 may have first and second ends. Rotor head 114 with rotor blades 112, 113 may be attached to the first end of the rotor shaft 115. The second end of the rotor shaft 115 may be installed within a gearbox, which may be driven by the engine 111.

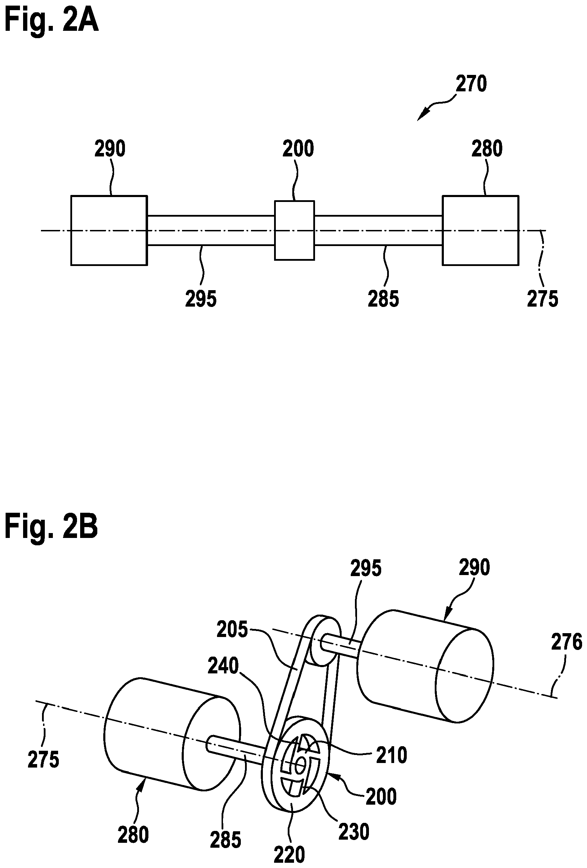

If desired, an overload coupling may couple the engine 111 with the rotor blades 112, 113 of the multi-blade rotor system 110. For example, one of the illustrative overload couplings 200 shown in Figure 2A to Figure 9A or Figure 11 to Figure 12F may implement at least a portion of the overload coupling of helicopter 100. In other words, helicopter 100 may include an overload coupling 200 as described below with reference to Figure 2 to Figure 9A and Figure 11 to Figure 12F.

Figure 2A is a diagram of an illustrative rotating drive system 270 with an overload coupling 200 between a driving device 280 and a driven device 290 that have a same rotation axis 275. Illustratively, the driving device 280 may rotate in normal operation around rotation axis 275 in a first rotation direction.

The driving device 280 may transmit a torque via a drive shaft 285 to the overload coupling 200. For example, the overload coupling 200 may have an inner connecting element, and drive shaft 285 may be coupled to the inner connecting element.

By way of example, the overload coupling may have an outer connecting element. Illustratively, overload coupling 200 may include at least a first and a second arm that connect the inner connecting element with the outer connecting element. The at least first and second arms may transmit the torque from the inner to the outer connecting element.

If desired, drive shaft 295 may be coupled to the outer connecting element. Drive shaft 295 may couple the outer connecting element with the driven device 290.

As an example, consider the scenario in which rotating drive system 270 represents at least a portion of rotor system 110 of rotary-wing aircraft 100 of Figure 1. In this scenario, the driving device 280 may include at least an engine (e.g., engine 111 of Figure 1), and the driven device 290 may include at least a plurality of rotor blades (e.g., rotor blades 112, 113 of Figure 1). The engine may transmit torque via drive shaft 285 to the overload coupling 200. The overload coupling 200 may transmit the torque via drive shaft 295 to the plurality of rotor blades.

Figure 2B is a diagram of an illustrative rotating drive system 270 with an overload coupling between a driving device 280 and a driven device 290 that have different rotation axes 275, 276.

The driving device 280 may transmit a torque via a drive shaft 285 to the overload coupling 200. For example, the overload coupling 200 may have an inner connecting element 210, and drive shaft 285 may be coupled to the inner connecting element 210.

By way of example, the overload coupling may have an outer connecting element 220. Illustratively, overload coupling 200 may include at least a first and a second arm 230, 240 that connect the inner connecting element 210 with the outer connecting element 220. The at least first and second arms 230, 240 may transmit the connecting element 220, thereby transmitting the rotation from drive shaft 285 to drive shaft 295.

Illustratively, the transmission of the rotation between drive shaft 285 and drive shaft 295 may occur inside a gearbox with the overload coupling 200 being placed inside the gearbox.

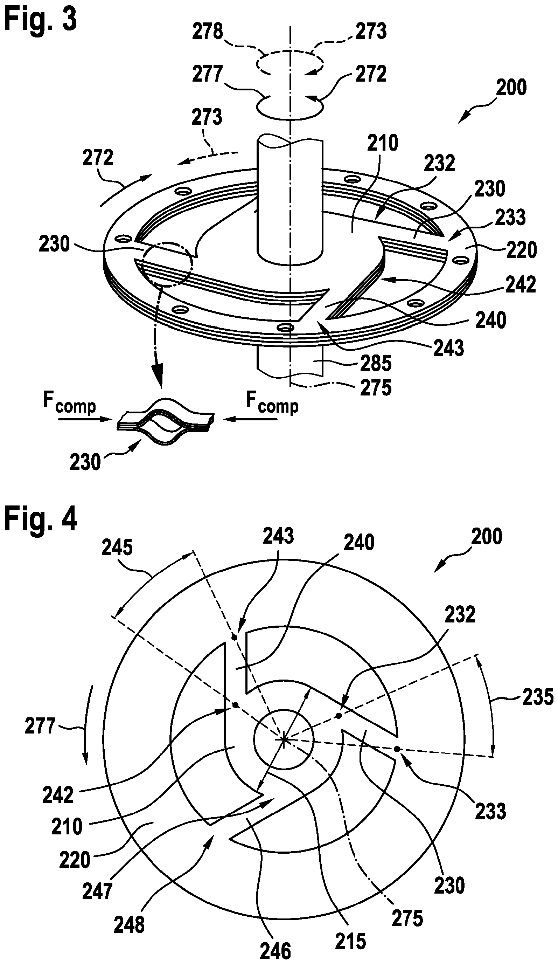

Figure 3 is an isometric view of overload coupling 200 according to a preferred embodiment, for coupling a driving device (e.g., driving device 280 of Figure 2A or Figure 2B) to a driven device (e.g., driven device 290 of Figure 2A or Figure 2B) via drive shaft 285. Illustratively, drive shaft 285 is connected to the driving device.

Overload coupling 200 includes an inner connecting element 210 and an outer connecting element 220 that rotate in normal operation around a common rotation axis 275 in a first direction of rotation 277. For example, the inner connecting element 210 may be coupled via drive shaft 285 to the driving device and the outer connecting element 220 to the driven device.

Illustratively, inner connecting element 210 and outer connecting element 220 are concentrically arranged around the common rotation axis 275. By way of example, inner connecting element 210 and outer connecting element 220 may be arranged in a same plane. If desired, inner connecting element 210 and outer connecting element 220 may be arranged in different planes that are parallel to each other.

The overload coupling 200 includes at least a first and a second arm 230, 240. The at least first and second arms 230, 240 connect the inner connecting element 210 with the outer connecting element 220.

Illustratively, the first arm 230 is attached to the inner connecting element 210 at a first attachment point 232 and to the outer connecting element 220 at a second attachment point 233. As shown in Figure 3, the second attachment point 233 is angularly displaced relative to the first attachment point 232 by a first angle such that the first attachment point 232 is ahead of the second attachment point 233 in the first direction of rotation 277.

Similarly, the second arm 240 is attached to the inner connecting element 210 at a third attachment point 242 and to the outer connecting element 220 at a fourth attachment point 243. As shown in Figure 3, the fourth attachment point 243 is angularly displaced by a second angle relative to the third attachment point 242 such that the third attachment point 242 is ahead of the fourth attachment point 243 in the first direction of rotation 277.

The first and second angles have first and second initial values, respectively, when no force is acting on the first and second arms 230, 240. The first and second initial values are smaller than 175 degrees.

As shown in Figure 3, each one of the at least first and second arms 230, 240 includes a staggered arrangement of at least two separate plates.

Illustratively, the inner connecting element 210 and/or the outer connecting element 220 may include an arrangement of at least one plate. As shown in Figure 3, the inner and outer connecting elements 210, 220 both include a staggered arrangement of at least two separate plates.

By way of example, the at least first and second arms 230, 240 may be integrally formed with at least one of the inner connecting element 210 or the outer connecting element 220. As shown in Figure 3, all arms 230, 240 are integrally formed with inner and outer connecting elements 210, 220.

The at least two separate plates of each one of the at least first and second arms 230, 240 is loaded in tension when a first torque 272 acts on the inner connecting element 210 in the first direction of rotation 277 or on the outer connecting element 220 in a second direction of rotation 278 that is opposite the first direction of rotation 277.

Similarly, the at least two separate plates of each one of the at least first and second arms 230, 240 is loaded with a compression force and buckles (e.g., as shown in the detail representation of arm 230 of Figure 3) when a second torque 273 acts on the inner connecting element 210 in the second direction of rotation 278 or on the outer connecting element 220 in the first direction of rotation 277. The second torque 273 causes the first and second angles to decrease below the respective first and second initial values.

Figure 4 is a diagram of an illustrative overload coupling 200. The illustrative overload coupling 200 may have an inner connecting element 210 that is ring-shaped. The ring-shaped inner connecting element 210 may have an outer diameter 215. By way of example, the outer connecting element 220 is ring-shaped.

The illustrative overload coupling 200 may include three arms 230, 240, 246. The three arms 230, 240, 246 may be arranged tangential to the outer diameter 215 of the inner connecting element 210. For example, the three arms 230, 240, 246 may be attached to the inner connecting element 210 at attachment points 232, 242, 247, respectively and to the outer connecting element 220 at attachment points 233, 243, 248, respectively, such that one edge of the respective arm 230, 240, 246 forms a tangent to the outer diameter 215 of the inner connecting element 210.

Illustratively, the attachment points 232, 242, and 247 may be equally spaced around the common rotation axis 275. For example, the attachment points 232, 242, and 247 may be spaced at an angle of 120° from each other on the inner connecting element 210. Similarly, the attachment points 233, 243, and 248 may be equally spaced around the common rotation axis 275. For example, the attachment points 233, 243, and 248 may be spaced at an angle of 120° from each other on the outer connecting element 220.

Illustratively, attachment point 233 may be angularly displaced relative to attachment point 232 by a first angle 235 such that attachment point 232 is ahead of attachment point 233 in the first direction of rotation 277. Similarly, attachment point 243 may be angularly displaced relative to attachment point 242 by a second angle 245 such that attachment point 242 is ahead of attachment point 243 in the first direction of rotation 277. First and second angles 235, 245 may be equal. If desired, first and second angles 235, 245 may be different.

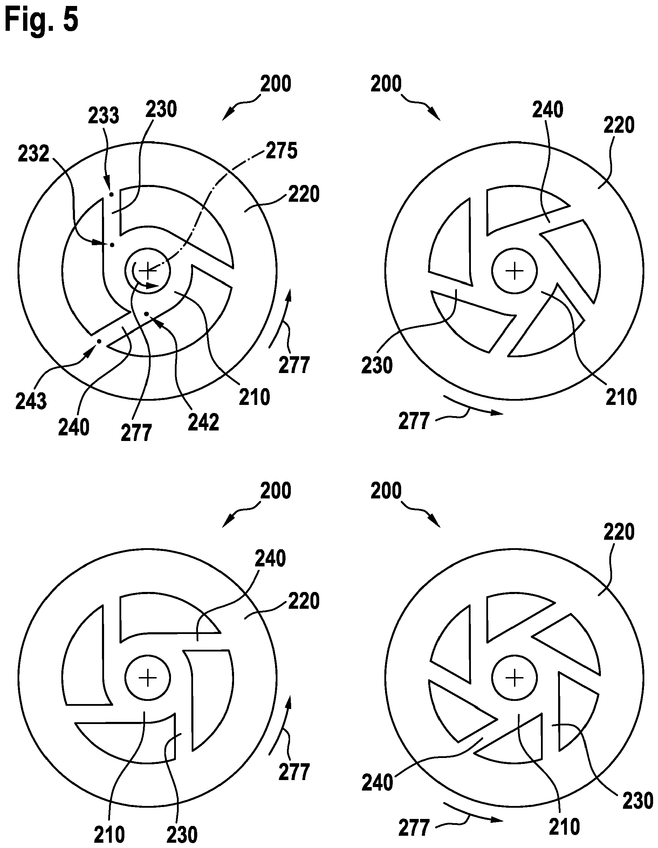

Figure 5 is a diagram of several illustrative overload couplings 200 having differing numbers of arms 230, 240 that connect an inner connecting element 210 with an outer connecting element 220. In particular, Figure 5 shows a first illustrative overload coupling 200 with three arms 230, 240, a second illustrative overload coupling 200 with four arms 230, 240, a third illustrative overload coupling 200 with five arms 230, 240, and a fourth illustrative overload coupling 200 with six arms 230, 240.

As shown in Figure 5, all four illustrative overload couplings 200 have an outer connecting element 220 that is ring-shaped and an inner connecting element 210 that is ring-shaped. The ring-shaped inner connecting element 210 may have an outer diameter 215, and the arms 230, 240 may be arranged tangential to the outer diameter of the inner ring.

Each arm 230, 240 in each one of the four illustrative overload couplings 200 may be attached to the inner connecting element 210 at respective attachment points 232, 242. Illustratively, the attachment points 232, 242 may be equally spaced around the common rotation axis 275.

For example, the three attachment points of the overload coupling 200 with three arms may be spaced at an angle of 120° from each other on the inner connecting element 210, the four attachment points of the overload coupling 200 with four arms may be spaced at an angle of 90° from each other on the inner connecting element 210, the five attachment points of the overload coupling 200 with five arms may be spaced at an angle of 72° from each other on the inner connecting element 210, and the six attachment points of the overload coupling 200 with six arms may be spaced at an angle of 60° from each other on the inner connecting element 210.

Similarly, each arm 230, 240 in each of the four illustrative overload couplings 200 may be attached to the outer connecting element 220 at respective attachment points 233, 243. Illustratively, the attachment points 233, 243 may be equally spaced around the common rotation axis 275.

For example, the three attachment points of the overload coupling 200 with three arms may be spaced at an angle of 120° from each other on the outer connecting element 220, the four attachment points of the overload coupling 200 with four arms may be spaced at an angle of 90° from each other on the outer connecting element 220, the five attachment points of the overload coupling 200 with five arms may be spaced at an angle of 72° from each other on the outer connecting element 220, and the six attachment points of the overload coupling 200 with six arms may be spaced at an angle of 60° from each other on the outer connecting element 220.

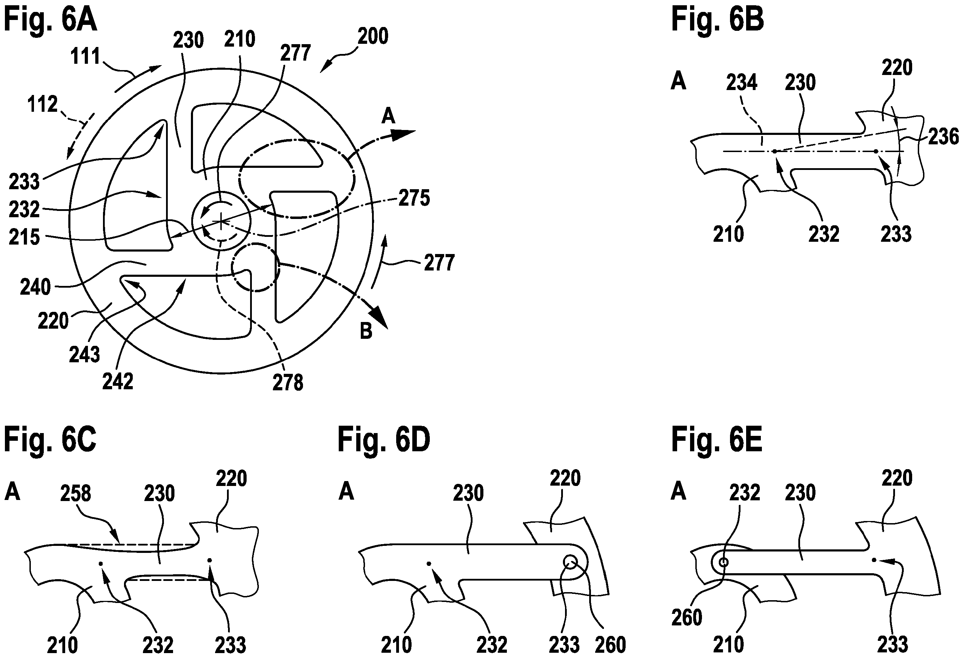

Figure 6A is a diagram of an illustrative overload coupling 200 with four arms between the inner connecting element 210 and the outer connecting element 220. Figures 6B, 6C, 6D, and 6E show partial views of the illustrative overload coupling 200 of Figure 6A.

Inner connecting element 210 and outer connecting element 220 may both be ring-shaped. The four arms 230, 240 may be attached to the inner connecting element 210 at attachment points 232, 242, respectively, and to the outer connecting element 220 at attachment points 233, 243, respectively.

Illustratively, the four arms may be tangential to the inner connecting element's 210 outer diameter 215. In other words, an imaginary line between inner and outer attachment points 232 and 233 or 242 and 243 may be parallel to a tangent to ring-shaped inner connecting element 210, whereby one edge of the arm 230 coincides with the tangent.

As shown in Figure 6A and in more detail in Figure 6B, the four arms 230, 240 may be tilted by angle 236 relative to the tangent 234 to the outer diameter 215 of ring-shaped inner connecting element 210, if desired.

By way of example, the four arms 230, 240 may have a same thickness and/or a same width between attachment points 232, 242 at the inner connecting element 210 and attachment points 233, 243 at the outer connecting element 220, as illustratively shown in Figure 6A. If desired, at least one of the four arms 230, 240 (e.g., arm 230) may include a narrowing section 258 between the attachment points 232 and 233 as illustratively shown in Figure 6C.

The narrowing section 258 may have any arbitrary shape. As an example, the narrowing section 258 may have an hourglass shape. As another example, the narrowing section 258 may have a concave shape.

Illustratively, the four arms 230, 240 may be integrally formed with at least one of the inner connecting element 210 or the outer connecting element 220. As shown in Figure 6A, the four arms 230, 240 may be integrally formed with the inner connecting element 210 and the outer connecting element 220.

If desired, fasteners may fasten at least one of the four arms 230, 240 to at least one of the inner connecting element 210 or the outer connecting element 220. Fasteners may include nuts and bolts, rivets, screws, pins, or any combination thereof. Alternatively, or in addition, the at least one of the four arms 230, 240 may be bonded to the at least one of the inner connecting element 210 or the outer connecting element 220.

Figure 6D is a diagram of a partial view of the illustrative overload coupling 200 of Figure 6A showing an arm 230 that is fastened to the outer connecting element 220 with a fastener 260.

Figure 6E is a diagram of a partial view of the illustrative overload coupling 200 of Figure 6A showing an arm 230 that is fastened to the inner connecting element 220 with a fastener 260.

As an example, fasteners 260 may fasten all four arms 230, 240 to the outer connecting element 220. As another example, fasteners 260 may fasten all four arms 230, 240 to the inner connecting element 210. As yet another example, fasteners 260 may fasten all four arms 230, 240 to inner and outer connecting elements 210, 220.

The transition between arms 230, 240 and inner and/or outer connecting elements 210, 220 may be sensitive to fatigue, static strength, buckling, and/or rip-off characteristics. Thus, the transition between arms 230, 240 and inner and/or outer connecting elements 210, 220 may be altered. If desired, arms 230, 240 may include at least one of a fillet or a recess at the transition with the at least one of the inner connecting element 210 or the outer connecting element 220.

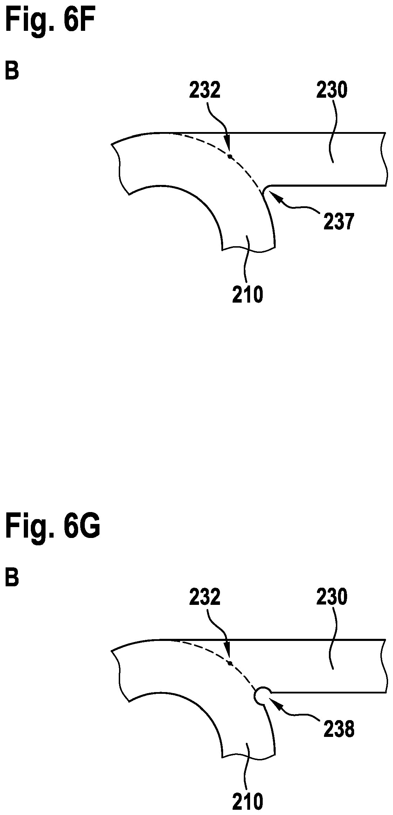

As an example, arms 230, 240 may include a fillet at the transition with the inner connecting element 210. Figure 6F is a diagram of a partial view of the illustrative overload coupling 200 of Figure 6A showing an arm 230 that includes a fillet 237 at the transition with the inner connecting element 210. As another example, arms 230, 240 may include a fillet at the transition with the outer connecting element 220.

Illustratively, arms 230, 240 may include a recess at the transition with the inner connecting element 210. Figure 6G is diagram of a partial view of the illustrative overload coupling 200 of Figure 6A showing an arm 230 that includes a recess 238 at the transition with the inner connecting element 210. If desired, arms 230, 240 may include a recess at the transition with the outer connecting element 220.

Overload coupling 200 of Figure 6A to Figure 6G may have arms 230, 240 that each include an arrangement of at least one plate. If desired, overload coupling 200 of Figure 6A to Figure 6G may have arms 230, 240 that each include a staggered arrangement of at least two separate plates.

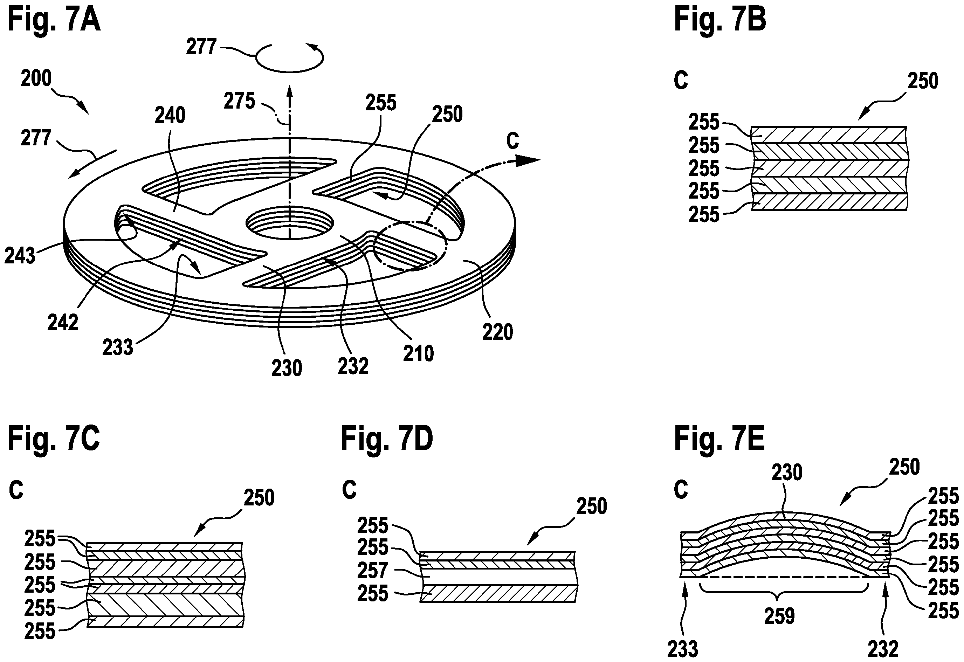

Figure 7A is a diagram of an illustrative overload coupling 200 with a staggered arrangement 250 of at least two separate plates 255. Illustratively, overload coupling 200 may have a staggered arrangement 250 of two, three, four, five, six, etc. separate plates 255.

The at least two separate plates 255 may be loosely arranged (i.e., without being fixed to each other). If desired, at least two of the at least two separate plates 255 may be fixed together. As an example, the at least two of the at least two separate plates 255 may be bonded together. As another example, a fastener may fasten the at least two of the at least two separate plates 255 together. If desired, all plates of the at least two plates 255 may be fixed together.

Illustratively, inner connecting element 210 and/or outer connecting element 220 may include a staggered arrangement 250 of at least two separate plates 255. As shown in Figure 7A, inner and outer connecting elements 210, 220 include a staggered arrangement of several separate plates 255. Illustratively, inner and outer connecting elements 210, 220 and arms 230, 240 may be integrally formed.

Illustratively, the separate plates 255 may all have the same thickness. For example, Figure 7B is a diagram of an illustrative cross-section of an arm 230 with a staggered arrangement 250 of plates 255 that all have the same thickness.

If desired, at least two of the separate plates 255 may have a different thickness. For example, Figure 7C is a diagram of an illustrative cross-section of an arm 230 with a staggered arrangement of plates 255 with at least two plates that have different thicknesses.

By way of example, the separate plates 255 may all be tightly packed together. If desired, at least two of the separate plates 255 may be separated by a gap 257. For example, Figure 7D is a diagram of an illustrative cross-section of an arm 230 with a staggered arrangement of separate plates 255 with at least two plates that are separated by a gap 257.

Illustratively, the separate plates 255 may all be made of the same material. If desired, at least two of the separate plates 255 may be made of different materials. The materials may be selected based on predetermined criteria. The predetermined criteria may include elasticity, plasticity, stiffness, strength, etc.

As an example, the upper and lower plates 255 may be made of a first material, and the plates 255 between the upper and lower plates 255 may be made of a second material. Illustratively, the first and second materials may be selected according to a predetermined criterion. As an example, the first and second materials may be selected such that the first material has a higher elasticity than the second material. As another example, the first material may be selected such that the first material has a protective function.

By way of example, the arms 230, 240 may have variations in their geometry. As an example, the arms 230, 240 may have an out-of-plane pre-deformation 259. As another example, the arms 230, 240 may have sections that are thicker and/or wider than other sections.

Figure 7E is a diagram of an illustrative cross-section of an arm 230 with a staggered arrangement 250 of separate plates 255 and a section with an out-of-plane pre-deformation 259. In other words, the arm 230 may have at least a portion between the attachment points 232, 233 with inner and outer connecting elements that is deformed such that at least a portion of arm 230 is in another plane than inner and outer connecting elements.

The out-of-plane pre-deformation 259 may have any arbitrary shape. As an example, the out-of-plane pre-deformation 259 may have an arc shape. As another example, the out-of-plane pre-deformation 259 may have an S-shape.

As shown in Figure 3 to Figure 7E, the staggered arrangement 250 of separate plates 255 may overlap each other completely at the first attachment point 232 and at the second attachment point 233. However, if desired, the separate plates 255 may overlap each other only partially or not at all at the second attachment point 233.

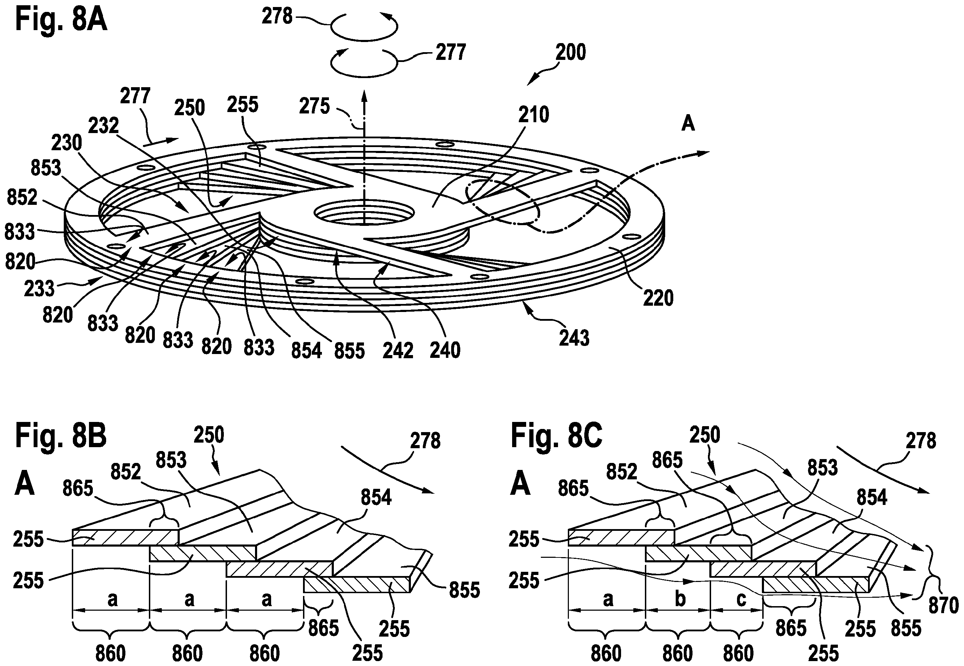

Figure 8A is a diagram of an illustrative overload coupling 200 with a staggered arrangement 250 of plates 255. Illustratively, overload coupling 200 may have a staggered arrangement 250 of two, three, four, five, six, etc. separate plates 255.

Illustratively, inner connecting element 210 and/or outer connecting element 220 may include a staggered arrangement 250 of at least two separate plates 255. As shown in Figure 8A, inner and outer connecting elements 210, 220 include a staggered arrangement of several separate plates 255.

By way of example, overload coupling 200 may include at least a first and a second arm 230, 240 that connect the inner connecting element 210 with the outer connecting element 220. As shown in Figure 8A, each one of the at least first and second arms 230, 240 may include a staggered arrangement 250 of at least two separate plates 255.

Two plates 852, 853, 854, 855 of the staggered arrangement 250 of separate plates 255 are hereinafter considered to be adjacent if these two plates are located immediately next to each other in the staggered arrangement 250. For example, plates 852 and 853, plates 853 and 854, or plates 854 and 855 are considered to be two adjacent plates.

The first arm 230 may be attached to the inner connecting element 210 at a first attachment point 232 and to the outer connecting element 220 at a second attachment point 233. The second attachment point 233 may be angularly displaced relative to the first attachment point 232 by a first angle 235 such that the first attachment point 232 is ahead of the second attachment point 233 in the first direction of rotation 277.

By way of example, the second attachment point 233 may include a plurality of attachments 833. Each attachment 833 of the plurality of attachments 833 may be located at a different location 820 on the outer connecting element 220.

Illustratively, at least two adjacent plates 852, 853 of the at least two separate plates 255 may connect the first attachment point 232 with different attachments 833 of the plurality of attachments 833.

For example, at least two adjacent plates 852, 853 of the at least two separate plates 255 may overlap each other only partially at the first attachment point 232. As shown in Figure 8A, all plates of the at least two separate plates 255 overlap each other completely at the first attachment point 232.

Illustratively, at least two adjacent plates 852, 853 of the at least two separate plates 255 may overlap each other partially at the second attachment point 233.

Figure 8B is a diagram of an illustrative cross-section of an arm 230, 240 with a staggered arrangement 250 of separate plates 255. Illustratively, at least two adjacent plates 852, 853 overlap each other partially at the second attachment point 233, 243.

As shown in Figure 8B, the overlap between any two adjacent plates 852, 853, 854, 855, and thereby the non-overlapping portion of the plates 255, is constant at the second attachment point 233, 243. If desired, the overlap between any two adjacent plates 852, 853, 854, 855, and thereby the non-overlapping portion of the plates 255, at the second attachment point 233, 243 may be selected to be non-constant.

Figure 8C is a diagram of an illustrative cross-section of an arm 230, 240 with a staggered arrangement 250 of separate plates 255. Illustratively, at least two adjacent plates 852, 853 overlap each other partially at the second attachment point 233, 243.

As shown in Figure 8C, the overlap between any two adjacent plates 852, 853, 854, 855, and thereby the non-overlapping portion of the plates 255, is non-constant at the second attachment point 233, 243.

As an example, the at least two adjacent plates 852, 853, 854, 855 may overlap each other at the second attachment point 233 with an increasing overlap 865 in the second direction of rotation 278. Thus, the non-overlapping portion 860 of the separate plates 255 may decrease in the second direction of rotation 278.

As another example, the at least two adjacent plates 852, 853, 854, 855 may overlap each other at the second attachment point 233 with a decreasing overlap 865 in the second direction of rotation 278. Thus, the non-overlapping portion 860 of the separate plates 255 may increase in the second direction of rotation 278.

In this example, the arms 230, 240 may approximate the shape of an airfoil. Thus, the arms 230, 240 that rotate in normal operation around rotation axis 275 in direction 277 may experience an airflow 870 such that the overload coupling 200 may act as a fan that produces an air stream. The air stream may have a predetermined delivery direction. If desired, the increasing overlap 865 in the second direction of rotation 278 of the at least two adjacent plates 852, 853, 854, 855 at the second attachment point 233 may be selected to determine the strength and/or the quantity and/or the delivery direction of the air stream.

Illustratively, the air stream produced by the overlap coupling 200 may be used to actively cool a device such as for example a bearing, an engine, a transmission, etc. The device may be located in the proximity of the overload coupling 200. If desired, an air duct may transport the air stream from the overload coupling 200 to a device that is located further apart from the overload coupling 200.

As shown in Figure 8A, the plurality of attachments 833 that form the second attachment point 233 may be located at a different location 820 on the outer connecting element 220 such that the staggered arrangement 250 of plates 255 overlap each other partially at the second attachment point 233. If desired, the plurality of attachments 833 that form the second attachment point 233 may be located at a different location 820 on the outer connecting element 220 such that the staggered arrangement 250 of plates 255 is non-overlapping at the second attachment point 233.

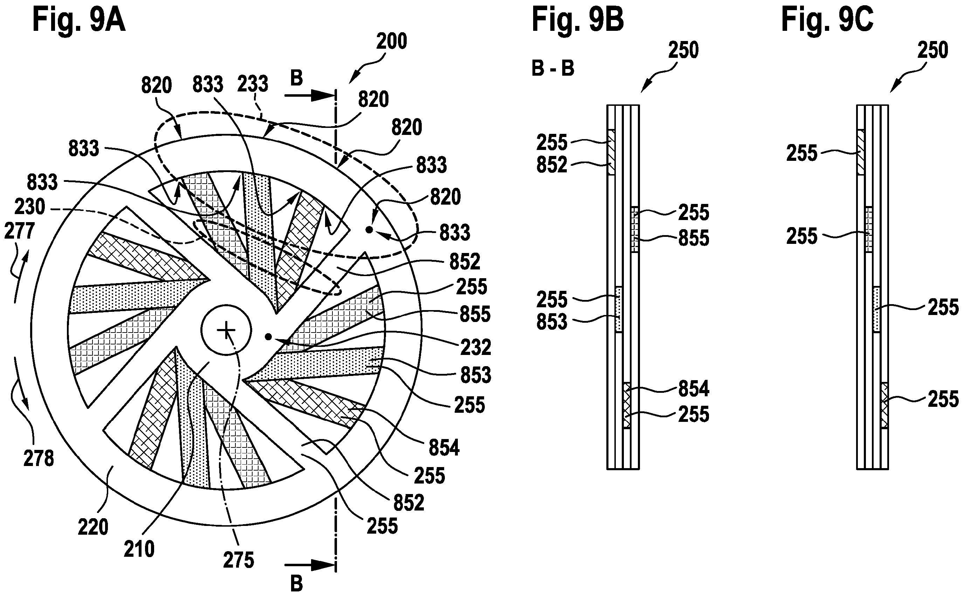

Figure 9A is a diagram of an illustrative overload coupling 200 with arms 230, 240 made of a staggered arrangement 250 of plates 255 that connect an attachment point 210 on the inner connecting element 210 with different attachments 833 of second attachment 233, 243 on the outer connecting element 220 such that the staggered arrangement 250 of plates 255 is non-overlapping at the respective second attachment points 233, 243.

As shown in Figure 9A, the plurality of attachments 833 of each second attachment 233, 243 of the at least two arms 230, 240 is evenly distributed on the outer connecting element 220. Thereby, the outer connecting element 220 may experience a uniform support and a balanced load during operation of the overload coupling 200.

Figure 9B is a diagram of an illustrative cross-section of an arm 230, 240 with a staggered arrangement 250 of plates 255 and adjacent plates 853, 854 that have non-adjacent attachments 833 on the outer connecting element 220.

Illustratively, the at least two adjacent plates 853, 854 may connect the first attachment point 232 with two attachments 833 of the plurality of attachments 833 that are separated by at least one other attachment 833 of the plurality of attachments 833. For example, as shown in Figure 9B, plate 855 connects the first attachment point 232 with the attachment 833 that separates the two attachments 833 to which the two adjacent plates 853, 854 are connected.

In this example, the at least two adjacent plates 853, 854 may experience at least a reduced friction against each other when the at least two adjacent plates 853, 854 are loaded with a compression force and buckle when a torque acts on the inner connecting element 210 in direction of rotation 278 or on the outer connecting element 220 in direction of rotation 277 compared to the plates 255 of the overload coupling 200 of Figure 3 or Figure 7A.

If desired, the at least two adjacent plates 853, 854 may connect the first attachment point 232 with two attachments 833 of the plurality of attachments 833 that are next to each other on the outer connecting element 220. Figure 9C is a diagram of an illustrative cross-section of an arm 230, 240 with a staggered arrangement 250 of plates 255 and adjacent plates 853, 854 that have adjacent, non-overlapping attachments 833 on the outer connecting element 220.

The overload couplings 200 of Figures 3 to 9A have at least a first and a second arm 230, 240 that connect the inner connecting element 210 with the outer connecting element 220. The first arm 230 of these overload couplings 200 is attached to an inner connecting element 210 at a first attachment point 232 and to an outer connecting element 220 at a second attachment point 233 such that the second attachment point 233 is angularly displaced relative to the first attachment point 232 by a first angle (e.g., angle 235 of Figure 4) such that the first attachment point 232 is ahead of the second attachment point 233 in the first direction of rotation 277.

The second arm 240 is attached to the inner connecting element 210 at a third attachment point 242 and to the outer connecting element 220 at a fourth attachment point 243 such that the fourth attachment point 243 is angularly displaced by a second angle (e.g., angle 245 of Figure 4) relative to the third attachment point 242 such that the third attachment point 242 is ahead of the fourth attachment point 243 in the first direction of rotation 277.

Illustratively, the first and second angles have first and second initial values, respectively, when no force is acting on the first and second arms 230, 240. As an example, the first and second initial values are smaller than 175 degrees.

By way of example, each one of the at least first and second arms 230, 240 includes an arrangement of at least one plate (e.g., arrangement 250 of plates 255 of Figure 7A).

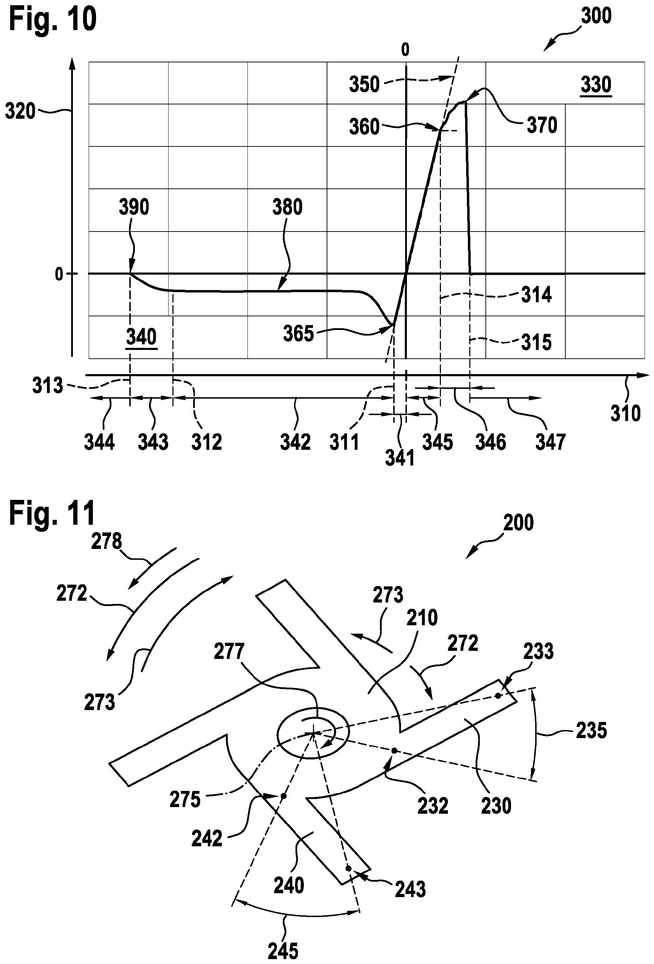

Figure 10 is a diagram 300 of an illustrative functional behavior of an overload coupling (e.g., overload coupling 200 of Figures 3 to 9A) showing the relationship between the torque that is applied to inner and outer connecting elements (e.g., inner and outer connecting elements 210, 220 of Figures 3 to 9A) and the change in angle between the inner and outer connecting elements (e.g., a change in angle of the angularly displaced attachment points 232, 242 and 233, 243 of the arms compared to the initial values for these angles 235, 245 of Figure 4).

The abscissa 310 of diagram 300 shows the change in angle between the inner and outer connecting elements. Thus, abscissa 310 of diagram 300 depicts the relative change of the angles between the attachment points of the arms at the inner connecting element and the attachment points of the arms at the outer connecting element (i.e., of angles 235, 245 of Figure 4) compared to their initial values.

In other words, a zero on the abscissa 310 means that angles 235, 245 of Figure 4 have their initial values. A positive value on the abscissa 310 means that angles 235, 245 are greater than their initial values, and a negative value on the abscissa 310 means that angles 235, 245 are smaller than their initial values.

For example, consider the scenario in which angle 235 of Figure 4 is α when arm 230 is not loaded with a force. In this scenario, a value of 5° on the abscissa 310 means that the angle 235 is equal to (α + 5°). Similarly, a value of -15° on the abscissa 310 means that the angle 235 is equal to (α - 15°).

It should be noted that the diagram 300 may not be to scale. In particular, the angles 235, 245 may only increase slightly (e.g., less than 2°) during normal operation on the linear elastic working curve 350 between failure onsets 360 and 365.

The ordinate 320 of diagram 300 shows the load in the respective arms 230, 240. A positive value on the ordinate 320 means that the respective arms 230, 240 are loaded in tension 330. A negative value on the ordinate 320 means that the respective arms 230, 240 are loaded with a compression force 340.

Thus, the relationship between the change in angle between the inner and outer connecting elements and the load in the respective arms 230, 240 passes from the first quadrant 330 through the origin into the third quadrant 340.

As an example, consider the scenario in which the overload coupling 200 of Figure 11 that has a ring-shaped inner connecting element 210 and four arms 230, 240 that extend tangentially from the outer diameter of the ring-shaped inner connecting element 210 rotate in normal operation around rotation axis 275 in direction 277. Consider further that the inner connecting element 210 is coupled to a driving device (e.g., engine 111 of rotor system 110 of rotary-wing aircraft 100 of Figure 1) and that the arms 230, 240 couple the inner connecting element 210 via an outer connecting element with a driven device (e.g., rotor blades 112, 113 of rotor system 110 of rotary-wing aircraft 100 of Figure 1).

Moreover, consider that the arms 230, 240 are attached at attachment points 232, 242 to the inner connecting element 210 and at attachment points 233, 243 to an outer connecting element, that the attachment points 233, 243 are angularly displaced relative to attachment points 232, 242 by angles 235, 245, respectively, and that each one of the arms 230, 240 includes an arrangement of at least one plate that is adapted to be loaded in tension 330 when a first torque 272 acts on the inner connecting element 210 in the first direction of rotation 277 or on the outer connecting element in a second direction of rotation 278 that is opposite the first direction of rotation 277.

Consider further that the at least one plate is adapted to be loaded with a compression force 340 and buckle when a second torque 273 acts on the inner connecting element 210 in the second direction of rotation 278 or on the outer connecting element in the first direction of rotation 277 such that the second torque 273 causes the first and second angles 235, 245 to decrease below the respective first and second initial values.

As a first example in this scenario, engine 111 of Figure 1 may be coupled to the inner connecting element 210 and rotor blades 112, 113 of Figure 1 may be coupled to the outer connecting element of overload coupling 200 of Figure 11. Engine 111 rotates in the first direction of rotation 277, which in turn rotates rotor blades 112, 113 in the first direction of rotation 277. Thus, torque 272 from engine 111 acts on the inner connecting element 210 in the first direction of rotation 277.

In this first example, a very high stiffness in the arms 230, 240 may be observed. The angles 235, 245 may only increase slightly during normal operation and remain on the linear elastic working curve 350 within range 345 of Figure 10. Thus, after an elimination of the torque 272 (e.g., when the engine is turned off and the rotor blades have come to a standstill), the angles 235, 245 return to their initial values.

If for any reason (e.g., due to an increased resistance from the rotor blades 112, 113) the angles 235, 245 increase by more than a value of 314 and less than a value shown with reference value 315 (i.e., as long the angles 235, 245 increase by a value within range 346), the arms 230, 240 may experience an onset of plasticisation 360. Thus, even after an elimination of the torque 272, the angles 235, 245 may not return to their initial values.

Any further increase of the angles 235, 245 beyond value 315 (i.e., by a value selected from range 347), may cause a sudden rupture 370 of the arms 230, 240. Thereby, the tension in the arms returns to zero.

As a second example in this scenario, engine 111 of Figure 1 may be coupled to the inner connecting element 210 and rotor blades 112, 113 of Figure 1 may be coupled to the outer connecting element. Engine 111 rotates in the first direction of rotation 277, which in turn rotates rotor blades 112, 113 in the first direction of rotation 277. However, suddenly the rotor blades 112, 113 move faster than the inner connecting element 210. Thus, torque 273 from rotor blades 112, 113 acts on the outer connecting element in the first direction of rotation 277. As a result, the arms 230, 240 are loaded with a compression force.

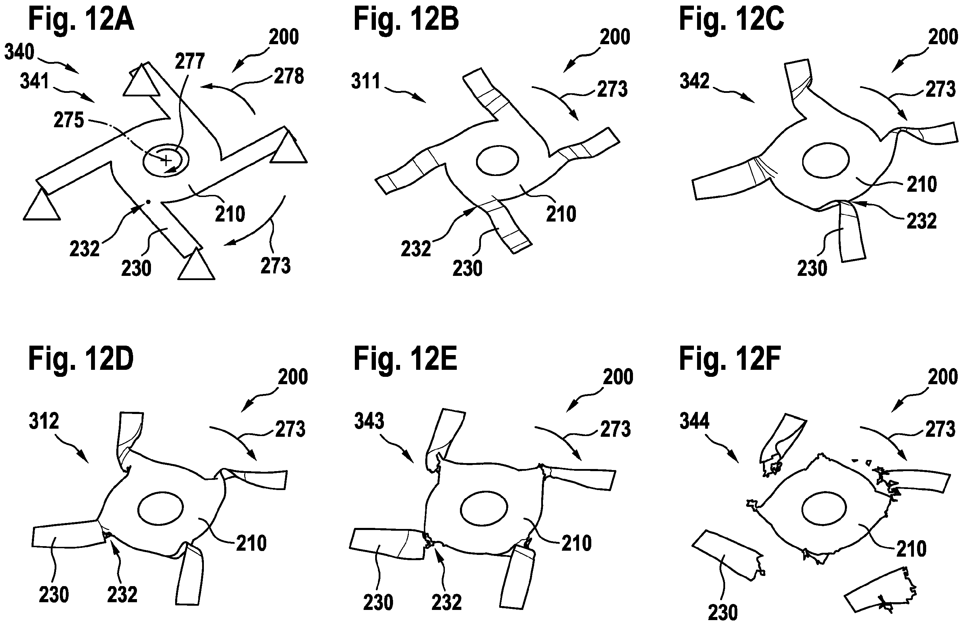

The behavior of the overload coupling 200 in this second example is illustrated with reference to Figures 12A to 12F. Figures 12A to 12F are diagrams of the illustrative overload coupling 200 of Figure 11 at different variations of angles 235, 245.

In this second example, the angles 235, 245 are allowed to decrease slightly during normal operation (e.g., when the throttle of the engine is reduced while the rotor blades are turning) and remain on the linear elastic working curve 350 within range 341 of Figure 10 (i.e., the angles 235, 245 are decreased by less than a value shown with reference number 311). Thus, after an elimination of the torque 273 (e.g., when the engine is turned off and the rotor blades have come to a standstill), the angles 235, 245 return to their initial values. This is illustrated in Figure 12A.

A further increase in torque 273 may lead to an increase in compression force in arms 230, 240 and in turn to a further decrease of angles 235, 245 by a value that is greater than the value shown with reference number 311 and less than the value shown with reference number 312 (i.e., a decrease by a value from within range 342). Such a further increase in torque 273 may represent a hazard for the stability of the overload coupling 200, which is depicted in Figure 12A by the unlabeled warning triangles. The further increase in torque 273 may be due to the occurrence of a failure case. As an example, the failure case may involve a sudden stoppage of the engine or a blocked bearing.

As a result, the arms 230, 240 may experience an onset of failure 365 caused by an initial buckling, which is illustratively shown in Figure 12B, followed by the forming of a bulge 380 (e.g., as also shown by the bulge that forms as a result of compression forces acting on arm 230 in Figure 3), which is illustratively shown in Figure 12C and by the folding and/or twisting of the arms, which is illustratively shown in Figure 12D.

The forming of the bulge and the folding and/or twisting of the arms has the effect that the compression force in the arms 230, 240 remains nearly constant even though the angles 235, 245 further decrease as shown in Figure 10.

The reference value 311 at which onset of failure 365 is observed may be preselected based on the number of arms 230, 240, the material of the arms 230, 240, the number of staggered plates, the thickness of the individual plates, the presence or absence of fillets, the presence or absence of recesses, etc.

When the decrease of angles 235, 245 reaches value 312, the arms 230, 240 begin to be torn from either the inner or the outer connecting element as illustratively shown in Figure 12E. As a result, the compression force in the arms 230, 240 further decreases while the change of angles 230, 240 is within range 343 of Figure 10.

When the decrease of angles 235, 245 becomes greater than the value shown with reference number 313 (i.e., the decrease is in range 344), the arms 230, 240 are ripped off the inner or outer connecting element as illustratively shown in Figure 12F, and the compression force returns to zero as shown in Figure 10.

Thus, the characteristic of the overload coupling 200 is a smooth rupture with high deformation capability. If desired, at least portions of the arms 230, 240 may remain connected to the inner and/or outer connecting element.

Diagram 300 of Figure 10 may have a first scale in the first quadrant 330 with respect to the change in angle 310 and/or the tension load 320 in arms 230, 240 and a second scale that is different than the first scale in the third quadrant 340 with respect to the change in angle 310 and/or the compression load 320 in arms 230, 240.

It should be noted that the abovementioned embodiments are merely described for illustration purposes, but not in order to restrict the present invention thereto. Instead, multiple modifications and variations of the presented embodiments are possible within the scope of the appended claims.

For example, overload couplings 200 of Figures 3 to 9A and 11 to 12F is shown with at least three and at most six arms 230, 240. However, overload couplings 200 of Figures 3 to 9A and 11 to 12F may have any number of arms 230, 240 that is greater than or equal to two.

Furthermore, the arms 230, 240 of Figures 3 to 9A and 11 to 12F are illustratively shown with a rectangular cross-section. However, the cross-section of the arms 230, 240 may have any shape. For example, the cross-section of the arms 230, 240 may be circular, oval, elliptical, polygonal, or any combination thereof. For example, a first cross-section of an arm 230, 240 may be circular and a second cross-section rectangular, if desired.

### Reference List

100 rotary-wing aircraft, rotorcraft, helicopter
110 multi-blade rotor system
111 engine
112, 113 rotor blades
114 rotor head
115 rotor shaft
117 rotation axis
119 rotor plane
120 fuselage
123 cabin
127 rear fuselage
130 tail boom
135 horizontal stabilizer
140 counter-torque device
145 tail rotor
150 fin
200 overload coupling
210 inner connecting element
215 outer diameter
220 outer connecting element
230 arm
232, 233 attachment point
234 tangent
235, 236 angle
237 fillet
238 recess
240 arm
242, 243 attachment point
245 angle
246 arm
247, 248 attachment point
250 staggered arrangement
255 plate
257 gap
258 narrowing section
259 out-of-plane pre-deformation
260 fastener
270 rotating drive system
272, 273 torque
275 rotation axis
277, 278 direction of rotation
280 driving device
285 drive shaft
290 driven device
295 drive shaft
300 diagram
310 abscissa, change in angle
311, 312, 313, 314, 315 current value of angle
320 ordinate, load in the arm
330 first quadrant, tension load
340 third quadrant, compression force load
341, 342, 343, 344, 345, 346, 347 range
350 elastic working curve
360 failure onset, onset of plasticisation
365 failure onset, buckling
370 rupture
380 bulge forming
390 rupture
820 location on the outer connecting element
833 attachment
852, 853, 854, 855 plate
860 non-overlapping portion
865 overlap
870 airflow

## Claims

1. An overload coupling (200) for coupling a driving device (280) to a driven device (290), comprising:
an inner connecting element (210) and an outer connecting element (220) that are concentrically arranged and rotate in normal operation around a common rotation axis (275) in a first direction of rotation (277), wherein the inner connecting element (210) is coupled to the driving device (280) and the outer connecting element (220) is coupled to the driven device (290); and
at least a first and a second arm (230, 240) that connect the inner connecting element (210) with the outer connecting element (220), wherein the first arm (230) is attached to the inner connecting element (210) at a first attachment point (232) and to the outer connecting element (220) at a second attachment point (233), wherein the second attachment point (233) is angularly displaced relative to the first attachment point (232) by a first angle (235) such that the first attachment point (232) is ahead of the second attachment point (233) in the first direction of rotation (277), wherein the second arm (240) is attached to the inner connecting element (210) at a third attachment point (242) and to the outer connecting element (220) at a fourth attachment point (243), wherein the fourth attachment point (243) is angularly displaced by a second angle (245) relative to the third attachment point (242) such that the third attachment point (242) is ahead of the fourth attachment point (243) in the first direction of rotation (277), wherein the first and second angles (235, 245) have first and second initial values, respectively, when no force is acting on the first and second arms (230, 240), wherein the first and second initial values are smaller than 175 degrees, and wherein each one of the at least first and second arms (230, 240) comprises:
an arrangement (250) of at least one plate (255), wherein the at least one plate (255) is loaded in tension (330) when a first torque (272) acts on the inner connecting element (210) in the first direction of rotation (277) or on the outer connecting element (220) in a second direction of rotation (278) that is opposite the first direction of rotation (277), and wherein the at least one plate (255) is loaded with a compression force (340) when a second torque (273) acts on the inner connecting element (210) in the second direction of rotation (278) or on the outer connecting element (220) in the first direction of rotation (277), wherein the first and second arms (230, 240) are formed with predefined geometries to enable buckling of the first and second arms (230, 240) when the second torque (273) exceeds a predetermined threshold, and wherein the second torque (273) causes the first and second angles (235, 245) to decrease below the respective first and second initial values,
wherein the arrangement (250) of the at least one plate (255) comprises a staggered arrangement (250) of at least two separate plates (255).

2. The overload coupling (200) of claim 1, wherein at least two of the at least two separate plates (255) are separated by a gap (257).

3. The overload coupling (200) of any one of claims 1 or 2, wherein at least two of the at least two separate plates (255) have a different thickness.

4. The overload coupling (200) of any one of claims 1 to 3, wherein at least two of the at least two separate plates (255) are made of different materials.

5. The overload coupling (200) of any one of claims 1 to 4, wherein the second attachment point (233) comprises a plurality of attachments (833), each attachment (833) of the plurality of attachments (833) being located at a different location (820) on the outer connecting element (220), wherein at least two adjacent plates (852, 853) of the at least two separate plates (255) connect the first attachment point (232) with different attachments (833) of the plurality of attachments (833), and wherein the at least two adjacent plates (852, 853) are located immediately next to each other in the staggered arrangement (250).

6. The overload coupling (200) of claim 5, wherein the at least two adjacent plates (852, 853) overlap each other partially at the second attachment point (233).

7. The overload coupling (200) of claim 6, wherein the at least two adjacent plates (852, 853, 854) overlap each other at the second attachment point (233) with an increasing overlap (865) in the second direction of rotation (278).

8. The overload coupling (200) of claim 5, wherein the at least two adjacent plates (255) connect the first attachment point (232) with two attachments (833) of the plurality of attachments (833) that are separated by at least one other attachment (833) of the plurality of attachments (833).

9. The overload coupling (200) of any one of the preceding claims, wherein the inner connecting element (210) is ring-shaped and has an outer diameter (215).

10. The overload coupling (200) of claim 9, wherein the at least first and second arms (230, 240) are arranged tangential to the outer diameter (215) of the inner connecting element (210).

11. The overload coupling (200) of any one of the preceding claims, wherein the outer connecting element (220) is ring-shaped.

12. The overload coupling (200) of any one of the preceding claims, further comprising:
fasteners (260) that fasten the at least first and second arms (230, 240) to at least one of the inner connecting element (210) or the outer connecting element (220).

13. The overload coupling (200) of any one of claims 1 to 11, wherein the at least first and second arms (230, 240) are integrally formed with at least one of the inner connecting element (210) or the outer connecting element (220).

14. The overload coupling (200) of claim 13, wherein the at least first and second arms (230, 240) comprise at least one of a fillet (237) or a recess (238) at the transition with the at least one of the inner connecting element (210) or the outer connecting element (220).

15. The overload coupling (200) of any one of the preceding claims, wherein the at least first and second arms (230, 240) further comprise at least one of an out-of-plane pre-deformation (259) or a narrowing section (258).

16. The overload coupling (200) of any one of the preceding claims, wherein the first and third attachment points (232, 242) are equally spaced around the common rotation axis (275).

17. A rotating drive system (270) comprising a driving device (280), a driven device (290), and the overload coupling (200) of any one of the preceding claims.

18. A rotor system (110) for a rotary-wing aircraft (100), comprising the rotating drive system (270) of claim 17, wherein the driving device (280) comprises at least an engine (111), and wherein the driven device (290) comprises at least a plurality of rotor blades (112).

19. A rotary-wing aircraft (100) comprising the rotor system (110) of claim 18.

## Patentansprüche

1. Überlastkupplung (200) zur Kopplung einer Antriebseinrichtung (280) mit einer Abtriebseinrichtung (290), umfassend:
ein inneres Verbindungselement (210) und ein äußeres Verbindungselement (220), die konzentrisch angeordnet sind und sich im Normalbetrieb um eine gemeinsame Drehachse (275) in einer ersten Drehrichtung (277) drehen, wobei das innere Verbindungselement (210) mit der Antriebseinrichtung (280) und das äußere Verbindungselement (220) mit der Abtriebseinrichtung (290) gekoppelt ist; und
mindestens einen ersten und einen zweiten Arm (230, 240), die das innere Verbindungselement (210) mit dem äußeren Verbindungselement (220) verbinden, wobei der erste Arm (230) an einem ersten Befestigungspunkt (232) mit dem inneren Verbindungselement (210) und an einem zweiten Befestigungspunkt (233) mit dem äußeren Verbindungselement (220) verbunden ist, wobei der zweite Befestigungspunkt (233) in Bezug auf den ersten Befestigungspunkt (232) um einen ersten Winkel (235) winkelversetzt ist, so dass der erste Befestigungspunkt (232) in der ersten Drehrichtung (277) vor dem zweiten Befestigungspunkt (233) liegt, wobei der zweite Arm (240) an einem dritten Befestigungspunkt (242) mit dem inneren Verbindungselement (210) und an einem vierten Befestigungspunkt (243) mit dem äußeren Verbindungselement (220) verbunden ist, wobei der vierte Befestigungspunkt (243) um einen zweiten Winkel (245) relativ zu dem dritten Befestigungspunkt (242) winkelversetzt ist, so dass der dritte Befestigungspunkt (242) in der ersten Drehrichtung (277) vor dem vierten Befestigungspunkt (243) liegt, wobei der erste und der zweite Winkel (235, 245) einen ersten bzw. einen zweiten Anfangswert haben, wenn keine Kraft auf den ersten und den zweiten Arm (230, 240) wirkt, wobei der erste und der zweite Anfangswert kleiner als 175 Grad sind, und wobei jeder der mindestens ersten und zweiten Arme (230, 240) umfasst:
eine Anordnung (250) mindestens einer Platte (255), wobei die mindestens eine Platte (255) mit einer Zugkraft (330) belastet ist, wenn ein erstes Drehmoment (272) auf das innere Verbindungselement (210) in der ersten Drehrichtung (277) oder auf das äußere Verbindungselement (220) in einer zweiten, zu der ersten Drehrichtung (277) entgegengesetzten Drehrichtung (278) wirkt, und wobei die mindestens eine Platte (255) mit einer Druckkraft (340) belastet ist, wenn ein zweites Drehmoment (273) auf das innere Verbindungselement (210) in der zweiten Drehrichtung (278) oder auf das äußere Verbindungselement (220) in der ersten Drehrichtung (277) wirkt, wobei der erste und zweite Arm (230, 240) mit vorgegebenen Geometrien ausgebildet sind, um ein Ausknicken des ersten und des zweiten Arms (230, 240) zu ermöglichen, wenn das zweite Drehmoment (273) einen vorgegebenen Schwellenwert überschreitet, und wobei das zweite Drehmoment (273) bewirkt, dass der erste und der zweite Winkel (235, 245) unter den jeweiligen ersten und zweiten Ausgangswert abnehmen,
wobei die Anordnung (250) der mindestens einen Platte (255) eine gestaffelte Anordnung (250) von mindestens zwei getrennten Platten (255) umfasst.

2. Überlastkupplung (200) nach Anspruch 1, bei der mindestens zwei der mindestens zwei getrennten Platten (255) durch einen Spalt (257) getrennt sind.

3. Überlastkupplung (200) nach einem der Ansprüche 1 oder 2, bei der mindestens zwei der mindestens zwei getrennten Platten (255) eine unterschiedliche Dicke aufweisen.

4. Überlastkupplung (200) nach einem der Ansprüche 1 bis 3, bei der mindestens zwei der mindestens zwei getrennten Platten (255) aus unterschiedlichen Materialien bestehen.

5. Überlastkupplung (200) nach einem der Ansprüche 1 bis 4, bei der der zweite Befestigungspunkt (233) eine Mehrzahl von Befestigungen (833) umfasst, wobei jede Befestigung (833) der Mehrzahl von Befestigungen (833) an einer anderen Stelle (820) auf dem äußeren Verbindungselement (220) angeordnet ist, wobei mindestens zwei benachbarte Platten (852, 853) der mindestens zwei getrennten Platten (255) den ersten Befestigungspunkt (232) mit verschiedenen Befestigungen (833) der Mehrzahl von Befestigungen (833) verbinden, und wobei die mindestens zwei benachbarten Platten (852, 853) in der gestaffelten Anordnung (250) unmittelbar nebeneinander angeordnet sind.

6. Überlastkupplung (200) nach Anspruch 5, bei der die mindestens zwei benachbarten Platten (852, 853) einander an dem zweiten Befestigungspunkt (233) teilweise überlappen.

7. Überlastkupplung (200) nach Anspruch 6, bei der die mindestens zwei benachbarten Platten (852, 853, 854) am zweiten Befestigungspunkt (233) mit einer in der zweiten Drehrichtung (278) zunehmenden Überlappung (865) überlappen.

8. Überlastkupplung (200) nach Anspruch 5, bei der die mindestens zwei benachbarten Platten (255) den ersten Befestigungspunkt (232) mit zwei Befestigungen (833) der Mehrzahl von Befestigungen (833) verbinden, die durch mindestens eine andere Befestigung (833) der Mehrzahl von Befestigungen (833) getrennt sind.

9. Überlastkupplung (200) nach einem der vorhergehenden Ansprüche, bei der das innere Verbindungselement (210) ringförmig ist und einen Außendurchmesser (215) aufweist.

10. Überlastkupplung (200) nach Anspruch 9, bei der die mindestens ersten und zweiten Arme (230, 240) tangential zum Außendurchmesser (215) des inneren Verbindungselements (210) angeordnet sind.

11. Überlastkupplung (200) nach einem der vorhergehenden Ansprüche, bei der das äußere Verbindungselement (220) ringförmig ausgebildet ist.

12. Überlastkupplung (200) nach einem der vorhergehenden Ansprüche, ferner umfassend:
Befestigungsmittel (260), die mindestens den ersten und den zweiten Arm (230, 240) an dem inneren Verbindungselement (210) und/oder dem äußeren Verbindungselement (220) befestigen.

13. Überlastkupplung (200) nach einem der Ansprüche 1 bis 11, bei der mindestens der erste und der zweite Arm (230, 240) einstückig mit mindestens dem inneren Verbindungselement (210) oder dem äußeren Verbindungselement (220) ausgebildet sind.

14. Überlastkupplung (200) nach Anspruch 13, wobei die mindestens ersten und zweiten Arme (230, 240) mindestens eine Ausrundung (237) oder eine Aussparung (238) am Übergang zu dem inneren Verbindungselement (210) und/oder dem äußeren Verbindungselement (220) umfassen.

15. Überlastkupplung (200) nach einem der vorhergehenden Ansprüche, bei der mindestens der erste und der zweite Arm (230, 240) ferner mindestens eine Vorverformung (259) außerhalb der Ebene oder einen Verengungsabschnitt (258) umfassen.

16. Überlastkupplung (200) nach einem der vorhergehenden Ansprüche, bei der der erste und der dritte Befestigungspunkt (232, 242) gleichmäßig um die gemeinsame Drehachse (275) beabstandet sind.

17. Drehantriebssystem (270), das eine Antriebseinrichtung (280), eine Abtriebseinrichtung (290) und die Überlastkupplung (200) nach einem der vorhergehenden Ansprüche umfasst.

18. Rotorsystem (110) für ein Drehflügelflugzeug (100), umfassend das Drehantriebssystem (270) nach Anspruch 17, wobei die Antriebseinrichtung (280) mindestens ein Triebwerk (111) umfasst, und wobei die Abtriebseinrichtung (290) mindestens eine Mehrzahl von Rotorblättern (112) umfasst.

19. Drehflügelflugzeug (100), umfassend das Rotorsystem (110) nach Anspruch 18.

## Revendications

1. Accouplement de surcharge (200) pour coupler un dispositif d'entraînement (280) à un dispositif entraîné (290), comprenant :
un élément de raccordement intérieur (210) et un élément de raccordement extérieur (220) qui sont agencés de façon concentrique et pivotent en fonctionnement normal autour d'un axe (275) de rotation commun suivant un premier sens (277) de rotation, dans lequel l'élément de raccordement intérieur (210) est couplé au dispositif d'entraînement (280) et l'élément de raccordement extérieur (220) est couplé au dispositif entraîné (290) ; et
au moins un premier et un second bras (230, 240) qui raccordent l'élément de raccordement intérieur (210) avec l'élément de raccordement extérieur (220), dans lequel le premier bras (230) est relié à l'élément de raccordement intérieur (210) à l'emplacement d'un premier point (232) de liaison et à l'élément de raccordement extérieur (220) à l'emplacement d'un deuxième point (233) de liaison, dans lequel le deuxième point (233) de liaison est décalé de façon angulaire par rapport au premier point (232) de liaison selon un premier angle (235) de façon que le premier point (232) de liaison se situe en avant du deuxième point (233) de liaison suivant le premier sens (277) de rotation, dans lequel le second bras (240) est relié à l'élément de raccordement intérieur (210) à l'emplacement d'un troisième point (242) de liaison et à l'élément de raccordement extérieur (220) à l'emplacement d'un quatrième point (243) de liaison, dans lequel le quatrième point (243) de liaison est décalé de façon angulaire selon un second angle (245) par rapport au troisième point (242) de liaison de façon que le troisième point (242) de liaison est situé en avant du quatrième point (243) de liaison suivant le premier sens (277) de rotation, dans lequel les premier et second angles (235, 245) ont respectivement des première et seconde valeurs initiales lorsqu'aucune force n'est exercée sur les premier et second bras (230, 240), dans lequel les première et seconde valeurs initiales sont inférieures à 175 degrés, et dans lequel chacun desdits au moins un premier et second bras (230, 240) comprend :
un agencement (250) d'au moins une plaque (255), dans lequel ladite au moins une plaque (255) est sollicitée en tension (330) lorsqu'un premier couple (272) agit sur l'élément de raccordement intérieur (210) suivant le premier sens (277) de rotation ou sur l'élément de raccordement extérieur (220) suivant un second sens (278) de rotation qui est opposé au premier sens (277) de rotation, et dans lequel ladite au moins une plaque (255) est soumise à une force de compression (340) lorsqu'un second couple (273) agit sur l'élément de raccordement intérieur (210) suivant le second sens (278) de rotation ou sur l'élément de raccordement extérieur (220) suivant le premier sens (277) de rotation, dans lequel les premier et second bras (230, 240) sont formés selon des géométries prédéfinies qui permettent la flexion des premier et second bras (230, 240) lorsque le second couple (273) dépasse un seuil prédéterminé, et dans lequel le second couple (273) provoque une réduction des premier et second angles (235, 245) sous les première et seconde valeurs initiales respectives,
dans lequel l'agencement (250) de ladite au moins une plaque (255) comprend un agencement (250) décalé d'au moins deux plaques (255) distinctes.

2. Accouplement de surcharge (200) selon la revendication 1, dans lequel au moins deux parmi lesdites au moins deux plaques (255) distinctes sont séparées par un espace vide (257).

3. Accouplement de surcharge (200) selon l'une quelconque des revendications 1 ou 2, dans lequel au moins deux parmi lesdites au moins deux plaques (255) distinctes présentent une épaisseur différente.

4. Accouplement de surcharge (200) selon l'une quelconque des revendications 1 à 3, dans lequel au moins deux parmi lesdites au moins deux plaques (255) distinctes sont formées de matériaux différents.

5. Accouplement de surcharge (200) selon l'une quelconque des revendications 1 à 4, dans lequel le deuxième point (233) de liaison comprend une pluralité d'attaches (833), chaque attache (833) parmi la pluralité d'attaches (833) étant située à un emplacement différent (820) sur l'élément de raccordement extérieur (220), dans lequel au moins deux plaques adjacentes (852, 853) parmi lesdites au moins deux plaques (255) distinctes raccordent le premier point (232) de liaison à différentes attaches (833) parmi la pluralité d'attaches (833), et dans lequel lesdites au moins deux plaques adjacentes (852, 853) sont situées à proximité immédiate l'une de l'autre selon l'agencement (250) décalé.

6. Accouplement de surcharge (200) selon la revendication 5, dans lequel lesdites au moins deux plaques adjacentes (852, 853) se chevauchent partiellement à l'emplacement du deuxième point (233) de liaison.

7. Accouplement de surcharge (200) selon la revendication 6, dans lequel lesdites au moins deux plaques adjacentes (852, 853, 854) se chevauchent à l'emplacement du deuxième point (233) de liaison avec un chevauchement croissant (865) suivant le second sens de rotation (278).

8. Accouplement de surcharge (200) selon la revendication 5, dans lequel lesdites au moins deux plaques adjacentes (255) raccordent le premier point (232) de liaison à deux attaches (833) parmi la pluralité d'attaches (833) qui sont séparées par au moins une autre attache (833) parmi de ladite pluralité d'attaches (833).

9. Accouplement de surcharge (200) selon l'une quelconque des revendications précédentes, dans lequel l'élément de raccordement intérieur (210) est en forme d'anneau et possède un diamètre extérieur (215).

10. Accouplement de surcharge (200) selon la revendication 9, dans lequel lesdits au moins un premier et second bras (230, 240) sont agencés de façon tangentielle au diamètre extérieur (215) de l'élément de raccordement intérieur (210).

11. Accouplement de surcharge (200) selon l'une quelconque des revendications précédentes, dans lequel l'élément de raccordement extérieur (220) est en forme d'anneau.

12. Accouplement de surcharge (200) selon l'une quelconque des revendications précédentes, comprenant en outre :
des jonctions (260) qui maintiennent lesdits au moins un premier et second bras (230, 240) sur au moins l'un parmi l'élément de raccordement intérieur (210) ou l'élément de raccordement extérieur (220).

13. Accouplement de surcharge (200) selon l'une quelconque des revendications 1 à 11, dans lequel lesdits au moins un premier et second bras (230, 240) sont formés de manière intégée à au moins l'un parmi l'élément de raccordement intérieur (210) ou l'élément de raccordement extérieur (220).

14. Accouplement de surcharge (200) selon la revendication 13, dans lequel lesdits au moins un premier et second bras (230, 240) comprennent au moins un congé de raccordement (237) ou un évidement (238) à l'emplacement de la transition avec ledit au moins un parmi l'élément de raccordement intérieur (210) ou l'élément raccordement extérieur (220).

15. Accouplement de surcharge (200) selon l'une quelconque des revendications précédentes, dans lequel lesdits au moins un premier et second bras (230, 240) comprennent en outre au moins l'une parmi une pré-déformation (259) non plane ou une partie rétrécie (258).

16. Accouplement de surcharge (200) selon l'une quelconque des revendications précédentes, dans lequel les premier et troisième points de liaison (232, 242) sont disposés à égale distance autour de l'axe (275) de rotation commun.

17. Système d'entraînement à rotation (270) comprenant un dispositif d'entraînement (280), un dispositif entraîné (290), et un accouplement de surcharge (200) selon l'une quelconque des revendications précédentes.

18. Système de rotor (110) pour un aéronef à voilure tournante (100), comprenant un circuit d'entraînement à rotation (270) selon la revendication 17, dans lequel le dispositif d'entraînement (280) comprend au moins un moteur (111), et dans lequel le dispositif entraîné (290) comprend au moins une pluralité de pales (112) de rotor.

19. Aéronef à voilure tournante (100) comprenant le système de rotor (110) selon la revendication 18.
